# EUROPÄISCHE PATENTSCHRIFT

(11) **EP 2 593 650 B1**
(45) Veröffentlichungstag und Bekanntmachung des Hinweises auf die Patenterteilung: **07.06.2017**
(21) Anmeldenummer: 11731323.9
(22) Anmeldetag: 06.07.2011
(51) Int. Cl.: F02D 13/02, F01L 13/00

(54) **VERFAHREN ZUM STEUERN EINER BRENNKRAFTMASCHINE**
METHOD FOR CONTROLLING AN INTERNAL COMBUSTION ENGINE
PROCÉDÉ DE COMMANDE D'UN MOTEUR À COMBUSTION INTERNE

(30) Priorität: 15.07.2010 DE 102010027213
(43) Veröffentlichungstag der Anmeldung: 22.05.2013
(73) Patentinhaber: Continental Automotive GmbH, 30165 Hannover (DE)
(72) Erfinder: SCHÜLE, Harry, 92431 Neunburg V. Wald (DE); STUTIKA, Markus, 93053 Regensburg (DE)
(86) Internationale Anmeldenummer: PCT/EP2011/061413
(87) Internationale Veröffentlichungsnummer: WO 2012/007336

(56) Entgegenhaltungen:
- WO-A1-2004/048761
- DE-A1- 4 036 847
- DE-A1- 10 064 650
- DE-A1- 19 741 820
- DE-A1-102005 062 558
- DE-A1-102006 062 038
- US-A1- 2004 139 949

## Beschreibung

Die vorliegende Erfindung betrifft ein Verfahren nach dem Oberbegriff des Anspruchs 1.

Insbesondere betrifft die Erfindung somit z. B. die Steuerung von einem Otto- oder Dieselmotor, der als Antriebsquelle in einem herkömmlichen Kraftfahrzeug oder als eine von mehreren Antriebsquellen in einem Hybridfahrzeug verwendet wird. Aus diesem automobilen Anwendungsbereich ist das Verfahren nach dem Oberbegriff des Anspruchs 1 in vielfältigen Ausführungen bekannt.

Die bei einer solchen Steuerung verwendete Ventiltrieb-Verstelleinrichtung zur steuerbaren Veränderung der Betätigungscharakteristik ("Hubkurve") wenigstens eines mittels einer Nockenwelle betätigten Ventils (Einlassventil oder Auslassventil) ermöglicht vorteilhaft eine Verringerung des Kraftstoffverbrauchs und/oder eine Leistungssteigerung im Vergleich zu Brennkraftmaschinen ohne Ventiltrieb-Verstelleinrichtung.

Von einem elektronischen Motorsteuergerät in einem Kraftfahrzeug gesteuerte Ventiltrieb-Verstelleinrichtungen sind in vielfältigen Ausführungen aus dem Stand der Technik bekannt. Es seien hier beispielhaft drei erwähnt: Bei der Verstelleinrichtung "Valvetronic" (BMW) wird mittels eines elektrischen Stellmotors und einer Exzenterwelle ein zwischen Nockenwelle und Ventilstössel angeordneter Betätigungsmechanismus zur Erzielung eines variablen Ventil(maximal)hubs in Abhängigkeit von bestimmten Betriebsparametern der Brennkraftmaschine verstellt. Diese Verstellung des Ventilhubs kann kombiniert werden mit einer so genannten Nockenwellenphasenverstellung, bei welcher abhängig vom Betriebszustand der Brennkraftmaschine außerdem eine relative Verstellung von Kurbelwelle und Nockenwelle zueinander und somit eine Veränderung der VentilSteuerzeiten vorgenommen wird. Bei der Verstelleinrichtung "VTEC" (Honda) ist ebenfalls eine elektronisch durch ein Motorsteuergerät gesteuerte Veränderung der Ventilbetätigungscharakteristik vorgesehen. Dieses System existiert in verschiedenen Varianten, denen jedoch gemeinsam ist, dass in Abhängigkeit von bestimmten Parametern des Motorbetriebs eine Umschaltung zwischen verschiedenen Betätigungscharakteristiken erfolgt. Bei der Verstelleinrichtung "Ti-VCT" (Ford) ist eine Verstellung mittels hydraulischer Aktuatoren vorgesehen. Die Verstellung wird in Abhängigkeit von der Motorlast stufenlos mittels einer elektronischen Kennfeld-Steuerung vorgenommen.

Die bekannten Ventiltrieb-Verstelleinrichtungen lassen sich grob in zwei Kategorien unterteilen, nämlich diskontinuierlich variable Systeme und kontinuierlich variable Systeme.

Ein diskontinuierlich variables System kann z. B. so aufgebaut sein, dass pro Ventil mehrere verschiedene Profile auf der Nockenwelle aufgebracht sind. Jedes Profil resultiert in einer anderen Hubkurve für das Ventil, wobei immer nur ein Profil aktiv sein kann und zwischen den verschiedenen Profilen umgeschaltet werden kann. Bei Konzepten dieser Art wird einer Wechsel der Hubkurve sprunghaft durchgeführt.

Kontinuierlich variable Systeme bieten demgegenüber eine weitergehende Variabilität des Ventiltriebs. Da diese Systeme eine stufenlose Veränderung der Ventilbetätigungscharakteristik ermöglichen, entfallen damit z. B. die durch eine sprunghafte Umschaltung ansonsten entstehenden Schwierigkeiten. Kontinuierliche Systeme werden vor allem zur verlustarmen Laststeuerung von Brennkraftmaschinen eingesetzt. Beispielsweise kann über die Variabilität der Hubkurve eines Einlassventils die Luft- bzw. Gemischzufuhr zum Brennraum gesteuert werden.

Insbesondere bei kontinuierlich variablen Systemen, welche durch ein elektronisches Steuergerät gesteuert werden, ist eine möglichst genaue Kenntnis des aktuellen Ventilhubs bzw. der aktuellen Einstellung des Systems notwendig, um eine einwandfreie und schnelle Steuerung bzw. Regelung des Systems zu ermöglichen und somit die Verbrennung optimal zu steuern. Bei bekannten Ventiltrieb-Verstelleinrichtungen ist daher ein Lagesensor (z. B. Drehwinkelgeber etc.) vorgesehen, welcher ein die aktuelle Lage (Einstellung) der Verstelleinrichtung darstellendes Lagesensorsignal an das Steuergerät liefert.

Ein derartiges Lagesensorsignal wird als Eingangsgröße bei der Steuerung, insbesondere z. B. Regelung, der Ventiltrieb-Verstelleinrichtung durch das elektronische Motorsteuergerät berücksichtigt.

In der Offenlegungsschrift DE 10 2006 062 038 A1 ist eine Fehlererfassungsvorrichtung für eine variable Ventilsteuerung dargestellt, bei der ein Fehler zwischen Ist- und Soll-Setzzeit anhand eines Setzgeräusches erfasst wird.

Die Veröffentlichungsschrift WO 2004/048761 A1 beschreibt, zur Erkennung eines Öffnungs- oder Schließereignisses anhand einer abfallenden kontinuierlichen Rampe im Druckverlauf zu erfassen.

Die Offenlegungsschrift DE 40 36 847 A1 beschreibt eine Ventilsteuerzeiteinrichtung, wobei die Ventilsteuerzeiten durch Detektieren des Kurbelwinkels eingestellt werden, bei welchem eine abrupte Änderung der zeitlichen Ableitung des Zylinderinnendrucks stattfindet.

Nachteilig bedeutet die Anordnung eines Lagesensors an der Ventiltrieb-Verstelleinrichtung jedoch einen gewissen konstruktiven Aufwand, insbesondere wenn das davon gelieferte Sensorsignal die tatsächliche aktuelle Einstellung mit großer Genauigkeit darstellen soll.

Es wäre daher wünschenswert, die Gewinnung einer Information über die aktuelle Einstellung der Ventiltrieb-Verstelleinrichtung zu vereinfachen, insbesondere um damit eine rasche und präzise Regelung der Ventiltrieb-Verstelleinrichtung zu ermöglichen.

Diese Aufgabe wird gemäß der Erfindung dadurch gelöst, dass mindestens ein von einem Zylinderdrucksensor zur Messung des Drucks in einem zugeordneten Zylinder geliefertes Zylinderdrucksignal im Hinblick auf Störsignale in Form von Unstetigkeiten, die beim Öffnen bzw. Schließen des Einlass- bzw. Auslassventils entstehen, ausgewertet wird, und dass das Auswertungsergebnis als eine Eingangsgröße bei der Steuerung der Ventiltrieb-Verstelleinrichtung berücksichtigt wird.

Dieses Auswertungsergebnis kann als solches als ein die aktuelle Einstellung der Ventiltrieb-Verstelleinrichtung darstellendes "Sensorsignal" verwendet werden. Alternativ kann dieses Auswertungsergebnis jedoch auch in Ergänzung zu einem Lagesensorsignal herkömmlicher Art dem Steuergerät zugeführt werden, sei es z. B. um eine Redundanz bei der Ermittlung der aktuellen Einstellung oder z. B. eine Verbesserung der Genauigkeit bei dieser Ermittlung zu realisieren. Ein weiterer Vorteil der Erfindung besteht darin, dass das Auswertungsergebnis außerdem zur Durchführung einer Diagnose hinsichtlich einer einwandfreien Funktion der Ventiltrieb-Verstellung verwendet werden kann. Falls z. B. mittels des Steuergerätes eine Verstellung angesteuert wird, das Auswertungsergebnis jedoch keine ordnungsgemäße tatsächliche Verstellung widerspiegelt, so liegt ein Fehler vor, bei dessen Detektion eine geeignete Warnung generiert bzw. ein Eintrag in einem Diagnosespeicher veranlasst werden kann.

Zylinderdrucksensoren sind im Bereich der Motortechnik an sich bekannt und dienen der Messung des Zylinderdrucks. Das Zylinderdrucksignal wird im Stand der Technik lediglich für die Auswertung der Verbrennung herangezogen. Damit können z. B. Fehler bei der Zumessung des Kraftstoffes, der Luftmasse oder eines zurückgeführten Verbrennungsabgasanteils bestimmt bzw. korrigiert werden. Im Falle einer mehrzylindrigen Brennkraftmaschine wird im Stand der Technik hierfür entweder nur ein einziger Zylinderdrucksensor an einem der Zylinder als Repräsentant für die Gesamtheit aller Zylinder herangezogen, oder alternativ für jeden Zylinder ein eigener Zylinderdrucksensor vorgesehen.

Derartige Zylinderdrucksensoren besitzen üblicherweise eine so hohe Empfindlichkeit bzw. ein so hohes Auflösungsvermögen bei der Messung des Zylinderdruckes, dass diese auch anfällig für Störgeräusche sind, die sich (als Körperschall) durch einen z. B. metallischen Zylinderblock ausbreiten. Die Grundidee der vorliegenden Erfindung besteht darin, die durch derartige Störgeräusche hervorgerufenen Störsignale in einem oder mehreren Zylinderdrucksignalen, die durch einen oder mehrere Zylinderdrucksensoren erfasst werden, als Informationsquelle betreffend den Motorzustand, insbesondere Zustand der Ventiltrieb-Verstelleinrichtung zu nutzen. Wenn eine oder mehrere Nockenwellen sich drehen, um damit den Ventiltrieb (Öffnen und Schließen von Einlass- und Auslassventilen) zu bewerkstelligen, so entstehen Geräusche, welche zu charakteristischen Störsignalen in dem bzw. den Zylinderdrucksignalen führen. Durch die erfindungsgemäße Auswertung des (wenigstens einen) Zylinderdrucksignals im Hinblick auf solche Störsignale können somit vorteilhaft Rückschlüsse auf die aktuelle Einstellung gezogen werden. Dies z. B. durch Anwendung geeignet vorbestimmter Auswertungskriterien, anhand derer im Motorsteuergerät eine Identifikation von Vorgängen im Ventiltrieb erfolgt, und nachfolgende Ermittlung der aktuellen Einstellung anhand der zuvor identifizierten Vorgänge im Ventiltrieb.

Ein mögliches Auswertungskriterium kann z. B. darin bestehen, plötzliche Änderungen, also etwa Unstetigkeiten bzw. "Signalspitzen" im gemessenen Druckverlauf zu detektieren und anhand ihrer Charakteristik (z. B. Amplitude, Frequenzanteile, Dauer etc.) und/oder anhand zusätzlicher Informationen über die Motorposition (z. B. Kurbelwellensignal, Nockenwellensignal etc.) einem ganz bestimmten Vorgang im Ventiltrieb (z. B. Ventilöffnungs- oder Ventilschließungsvorgang) zuzuordnen. Eine derartige Vorgehensweise ist wesentlich einfacher, schneller und oftmals präziser als z. B. eine Auswertung auf Basis eines Vergleiches des gemessenen Druckverlaufes (Zylinderdrucksignal) mit vorab gespeicherten typischen Druckverläufen.

Insbesondere kann die Auswertung eine Identifikation von Zeitpunkten bzw. Kurbelwinkeln umfassen, bei denen Einlassventile und/oder Auslassventile geöffnet oder geschlossen werden. Für diesen Auswertungsschritt können z. B. Störsignale detektiert werden, die durch die betreffenden Ventile bei deren Betätigung hervorgerufen werden.

Ein in der Praxis besonders deutlich hervortretendes und somit vergleichsweise einfach durch eine Auswertung detektierbares Störsignal ergibt sich z. B. beim Abschluss eines Schließvorganges eines Ventils (Einlass- oder Auslassventil). Das zu diesem Zeitpunkt erfolgende Aufsetzen eines Ventilkörpers (z. B. Ventilteller) auf eine Dichtungsfläche im Bereich einer den zugehörigen Zylinder begrenzenden Wandung führt zu einer mechanischen Erschütterung, die sich als Störsignal (z. B. "Signalspitze") im eigentlichen Nutzsignal (repräsentativ für den Zylinderdruck) sehr deutlich bemerkbar macht.

Im Fall einer mehrzylindrigen Brennkraftmaschine ist es insbesondere im Hinblick auf eine einfache und zuverlässige Identifizierung desjenigen Ventils, welches ein bestimmtes Störsignal hervorgerufen hat, bevorzugt, dass die Zylinderdrucksignale von sämtlichen Zylindern jeweils zugeordneten Zylinderdrucksensoren ausgewertet werden. Hierfür muss jeder Zylinder mit mindestens einem Zylinderdrucksensor versehen sein, der z. B. im Bereich eines betreffenden Zylinderkopfes eingebaut sein kann.

Grundsätzlich können mit einem Zylinderdrucksensor und geeigneter Auswertung des davon gelieferten Zylinderdrucksignals die Geräusche des Öffnens bzw. des Schließens des Einlasswie auch des Auslassventils erfasst werden. Für die Ermittlung der aktuellen Einstellung der Ventiltrieb-Verstelleinrichtung während des Motorbetriebes können dementsprechend insbesondere die Zeitpunkte von Störsignalen berücksichtigt werden, welche durch ein Öffnen oder ein Schließen eines Einlassventils oder eines Auslassventils hervorgerufen werden. Die jeweilige Stärke der dadurch hervorgerufenen Störsignale hängt z. B. von der konkret gewählten Einbauposition des Sensors ab. Durch einen entsprechenden Einbau des Zylinderdrucksensors, beispielsweise näher einem Einlassventil als einem Auslassventil des betreffenden Zylinders, können qualitativ und/oder quantitativ im Rahmen der Auswertung voneinander unterscheidbare Störsignale einerseits des Einlassventils und andererseits des Auslassventils hervorgerufen werden, so dass vorteilhaft das ein bestimmtes Störsignal hervorrufende Ventil in einfacher Weise identifiziert werden kann (z. B. anhand der Störsignalamplitude).

Falls es sich bei dem zur Steuerung der Ventiltrieb-Verstelleinrichtung als Eingangsgröße berücksichtigten Auswertungsergebnis um die Zeitpunkte bzw. Kurbelwinkel handelt, zu denen ein bestimmter Ventilöffnungsvorgang beginnt, oder Ventilschließvorgang endet, so kann im Steuergerät eine Ermittlung der aktuellen Einstellung der Verstelleinrichtung z. B. dadurch bewerkstelligt werden, dass anhand eines vorbestimmten Algorithmus (bzw. mittels eines im Steuergerät abgespeicherten Kennfeldes oder dergleichen) der Rückschluss auf den Verlauf des gesamten Ventilbetätigungsvorganges ("Hubkurve") gezogen wird. Die Information über den Verlauf der Hubkurve (z. B. in Abhängigkeit vom Kurbelwinkel) ist jedoch gleichbedeutend mit einer Information über die aktuelle Einstellung der Verstelleinrichtung.

Eine Voraussetzung für das Funktionieren dieser Methode der Ermittlung der aktuellen Einstellung kann ein vorgegebener Zusammenhang zwischen den Ventilsteuerzeiten (d. h. denjenigen Zeitpunkten bzw. Kurbelwinkeln, zu denen ein Ventilöffnungsvorgang beginnt bzw. ein Ventilschließvorgang endet) und/oder Ventilöffnungsdauer einerseits und der aktuellen Einstellung der Ventiltrieb-Verstelleinrichtung andererseits sein.

Diese Voraussetzung ist z. B. dann erfüllt, wenn die variable Einstellung durch eine Schar von sich in einer Auftragung des Ventilhubs gegen den Kurbelwinkel nicht schneidenden Hubkurven repräsentiert wird. In diesem Fall bedeuten verschiedene Ventilsteuerzeiten verschiedene Hubkurven, so dass unter Berücksichtigung der konkreten Funktionsweise der Ventiltrieb-Verstelleinrichtung aus der Kenntnis dieser Ventilsteuerzeiten auf die dann eindeutig zugeordneten Hubkurven geschlossen werden kann. Letzterer Rückschluss kann z. B. mittels geeigneter Auswertungssoftware im Steuergerät durchgeführt werden, mittels welcher auch die vorausgehende Ermittlung der Ventilsteuerzeiten bewerkstelligt wird.

Mit der Erfindung kann somit unabhängig von einem gegebenenfalls im Bereich der Ventiltrieb-Verstelleinrichtung vorgesehenen Lagesensor eine Information über die aktuelle Einstellung dieser Verstelleinrichtung gewonnen werden. Somit ist es insbesondere möglich, auf einen eigens hierfür vorgesehenen Lagesensor zu verzichten. Die "Zweckentfremdung" wenigstens eines Zylinderdrucksensors im Rahmen der Erfindung schließt hierbei keineswegs aus, dass das oder die gewonnenen Zylinderdrucksignale auch in "herkömmlicher Weise", also zur Beurteilung der Verbrennungsqualität im Motorbetrieb verwendet werden.

In einer Ausführungsform ist vorgesehen, dass die Veränderung der Betätigungscharakteristik des betreffenden Ventils eine Ventilhubverstellung umfasst und das Auswertungsergebnis als eine Eingangsgröße bei der Steuerung der Ventilhubverstellung berücksichtigt wird. Damit ist gemeint, dass die Ventiltrieb-Verstelleinrichtung zur Erzielung unterschiedlicher Ventilmaximalhübe angesteuert werden kann.

Alternativ oder zusätzlich kann vorgesehen sein, dass die Veränderung der Betätigungscharakteristik des betreffenden Ventils eine Nockenwellenphasenverstellung umfasst und das Auswertungsergebnis als eine Eingangsgröße bei der Steuerung der Nockenwellenphasenverstellung berücksichtigt wird. Damit ist in einem weiteren Sinne gemeint, dass die Ventiltrieb-Verstelleinrichtung zur Veränderung der Ventilsteuerzeiten des betreffenden Ventils angesteuert werden kann. Im engeren Sinne kann die "Nockenwellenphasenverstellung" die hierfür geeignete Relativverdrehung zwischen Nockenwelle und Kurbelwelle bezeichnen.

In einer bevorzugten, die vorstehend genannten Möglichkeiten kombinierenden Ausführungsform umfasst die Veränderung der Betätigungscharakteristik sowohl eine Ventilhubverstellung als auch eine Nockenwellenphasenverstellung (also Veränderung der Steuerzeiten) des betreffenden Ventils.

In einer Ausführungsform erfolgt die Veränderung der Betätigungscharakteristik des betreffenden Ventils stufenlos.

Bei herkömmlichen Brennkraftmaschinen ist ein Nockenwellensensor vorgesehen, der ein vom Nockenwellenwinkel abhängiges Nockenwellensignal liefert. Diesbezüglich ist jedoch auf die im Rahmen der Erfindung prinzipiell denkbare Möglichkeit hinzuweisen, auf die Nutzung eines Nockenwellensensors bzw. des damit gelieferten Nockenwellensignals bei der Ermittlung des Nockenwellenwinkels zu verzichten. Prinzipiell ist es denkbar, zu diesem Zweck das Auswertungsergebnis betreffend die Störsignale des Zylinderdrucksignals zu nutzen.

In einer Ausführungsform der Erfindung, bei welcher ein Nockenwellensensor vorhanden ist, kann für die Steuerung der Ventiltrieb-Verstelleinrichtung eine aktuelle Einstellung der Ventiltrieb-Verstelleinrichtung z. B. dadurch ermittelt werden, dass ein auf Basis des Auswertungsergebnisses detektierter Zeitpunkt oder Kurbelwinkel eines bestimmten Ereignisses eines Ventilbetätigungsvorganges in Relation zu einem auf Basis des Nockenwellensignals detektierten Zeitpunkt bzw. Kurbelwinkel eines anderen bestimmten Ereignisses desselben Ventilbetätigungsvorganges gesetzt wird.

Bei dem auf Basis des Auswertungsergebnisses detektierten Zeitpunkt kann es sich insbesondere um denjenigen Zeitpunkt (gleichbedeutend Kurbelwinkel) handeln, zu dem ein bestimmtes Ventil schließt (Aufsetzen eines Ventilkörpers an einer Ventildichtfläche). Dieser Zeitpunkt kann z. B. in Relation zu dem auf Basis des Nockenwellensignals (üblicherweise unter Mitberücksichtigung des Kurbelwellensignals) ermittelten Zeitpunkt bzw. Kurbelwinkel gesetzt werden, zu welchem zuvor das Ventilhubmaximum erreicht wurde. Aus diesen beiden Zeitpunkten bzw. Kurbelwinkeln lässt sich dann durch eine einfache Differenzbildung die Zeitspanne bzw. Kurbelwinkeldifferenz zwischen Hubmaximum und Abschluss des Ventilschließvorganges ermitteln (berechnen). Aus dieser Differenz kann dann wiederum unter Verwendung eines geeigneten Softwarealgorithmus bzw. vorab gespeicherten Kennfeldes auf die aktuelle Einstellung der Ventiltrieb-Verstelleinrichtung geschlossen werden.

Wie oben bereits erwähnt, funktioniert diese Methode der Ermittlung der aktuellen Einstellung z. B. dann, wenn die Variabilität der Ventiltrieb-Verstelleinrichtung durch eine sich nicht schneidende Schar von Ventilhubkurven repräsentiert wird. In diesem Fall ergeben sich für verschiedene Hubkurven stets verschiedene Zeit- bzw. Kurbelwinkeldifferenzen zwischen Hubmaximum und Abschluss der Ventilbetätigung (vollständiges Schließen des betreffenden Ventils).

Diese Methode, auf Basis einer Ermittlung eines Ventilschließzeitpunktes auch die zugehörige Hubkurve bzw. Einstellung zu ermitteln, gelingt jedoch z. B. auch dann, wenn mit der Verstellung der Verstelleinrichtung keine Veränderung des Ventilschließzeitpunktes sondern nur des Ventil(maximal)hubs einhergeht. In diesem Fall wird sich nämlich das sich durch Aufsetzen des Ventilkörpers (z. B. Ventilteller) auf die betreffende Ventildichtfläche (z. B. Einlassmündung an einem Zylinderkopf) ergebende Störgeräusch in der Regel in Abhängigkeit vom zuvor erreichten Ventilhub verändern. Dies z. B. bedingt durch eine vom zuvor erreichten Ventilmaximalhub abhängige Geschwindigkeit, mit welcher der Ventilkörper an der Dichtfläche auftrifft. Nachdem derartige Unterschiede des verursachten Geräusches bzw. Körperschalls jedoch bei der Auswertung des Zylinderdrucksignals detektiert werden können, kann auch in diesem Fall ein entsprechender Rückschluss auf den zuvor erreichten Ventilmaximalhub bzw. somit die Einstellung der Ventiltrieb-Verstelleinrichtung gezogen werden.

Wie bereits erwähnt ist es denkbar, im Rahmen der Erfindung auf einen für die Ermittlung des Nockenwellenwinkels vorgesehenen Nockenwellensensor zu verzichten. Falls ein solcher Nockenwellensensor jedoch vorgesehen ist, so kann die vom Steuergerät durchgeführte Ermittlung des Nockenwellenwinkels im Rahmen der Erfindung vorteilhaft z. B. zusätzlich unter Berücksichtung des Ergebnisses der Auswertung des Zylinderdrucksignals bewerkstelligt sein.

Die Information darüber, ob und wie schnell sich die Kurbelwelle dreht, wird bei bekannten Motoren anhand des Kurbelwellensignals gewonnen. Es handelt sich hierbei üblicherweise um ein "Zahnsignal": Jeder Impuls des Kurbelwellensignals entspricht einem Zahn eines mit einer Vielzahl von Zähnen versehenen Geberrades. Ein für jeweils eine Kurbelwellenumdrehung (360°) vorgesehener Synchronisationsimpuls entspricht üblicherweise einer einfachen oder doppelten "Zahnlücke" nach der entsprechenden Anzahl von Zähnen.

Das Nockenwellensignal dient zur Kodierung des Nockenwellenwinkels, und hat im einfachsten Fall zwei unterschiedliche Pegel, die zwei aufeinanderfolgenden Umdrehungen der Kurbelwelle zugeordnet sind. Das Nockenwellensignal kann jedoch auch andere Signal- bzw. Impulsformen aufweisen. Es sollte jedoch gewährleistet sein, dass das Nockenwellensignal eine Unterteilung jedes Arbeitsspiels des Motors in zwei Segmente (von jeweils 360°) entsprechend zwei aufeinanderfolgenden Kurbelwellenumdrehungen (720°) erlaubt.

Derartige, an sich bekannte Kurbelwellensignale und Nockenwellensignale können vorteilhaft auch im Rahmen der vorliegenden Erfindung vorgesehen sein (vgl. z. B. DE 100 56 862 C1).

In einer Weiterbildung der Erfindung ist vorgesehen, dass das Auswertungsergebnis zur Plausibilisierung des vom Kurbelwellensensor gelieferten Kurbelwellensignals und/oder des vom Nockenwellensensor gelieferten Nockenwellensignals verwendet wird. Damit kann beispielsweise der Fall einer fehlerhaften (defekten) Erzeugung des Kurbelwellensignals und/oder des Nockenwellensignals diagnostiziert, und beispielsweise in einem bei Kraftfahrzeugen üblichen Diagnosespeicher als Fehlereintrag gespeichert werden. Alternativ oder zusätzlich kann die Plausibilisierung auch zur Diagnose von irgendwelchen Montagefehlern, beispielsweise von falsch montierten Nockenwellenantrieben wie Zahnriemen oder Ketten verwendet werden.

Alternativ oder zusätzlich kann die erwähnte Plausibilisierung des Kurbelwellen- und/oder Nockenwellensignals noch weiteren Zwecken dienen.

So ist gemäß einer Weiterbildung beispielsweise vorgesehen, dass das Ergebnis der Auswertung des Zylinderdrucksignals im Hinblick auf Störsignale bei Feststellung eines unplausiblen Kurbelwellensignals als Ersatz für dieses Kurbelwellensignal oder zur Berichtigung dieses Kurbelwellensignals und/oder bei Feststellung eines unplausiblen Nockenwellensignals als Ersatz für dieses Nockenwellensignal oder zur Berichtigung dieses Nockenwellensignals verwendet wird.

Insbesondere kann das gemäß der Erfindung vorgesehene Auswertungsergebnis somit auch zur Drehzahlberechnung und/oder Realisierung eines Notlaufes bei defektem Kurbelwellensensor bzw. einem Defekt im Bereich der Bereitstellung des Kurbelwellensignals (an das Steuergerät) verwendet werden. Dasselbe gilt für den Fall eines defekten Nockenwellensensors bzw. einer fehlerhaften Bereitstellung des Nockenwellensignals.

Eine weitere im Rahmen der Erfindung interessante Möglichkeit besteht darin, das Auswertungsergebnis zur Erkennung und dann bevorzugt auch Adaption von Abweichungen im Ventiltrieb bzw. der Ventiltrieb-Verstelleinrichtung in Folge von Bauteiltoleranzen und/oder Alterungen zu berücksichtigen. Durch Bauteiltoleranzen und Alterungen kann es insbesondere zu einer Abweichung der konstruktiv vorgesehenen Zeiten bzw. Winkel für Ventilöffnungsvorgänge und Ventilschließvorgänge kommen. In diesem Fall wäre die lediglich anhand des Nockenwellensignals und/oder eines Lagesensorsignals der Ventiltrieb-Verstelleinrichtung gewonnene Information ungenau, was die Zeitpunkte bzw. Winkel der tatsächlichen Öffnungs- und Schließvorgänge anbelangt. Da mittels der Auswertung des Zylinderdrucksignals im Hinblick auf Störsignale jedoch die tatsächlichen Öffnungs- und/oder Schließvorgänge der Ventile detektiert werden können, stellt das Auswertungsergebnis eine in der Praxis äußerst wertvolle Informationsquelle für die Motorsteuerung und insbesondere die Steuerung der Ventiltrieb-Verstelleinrichtung dar.

Durch die erfindungsgemäß vorgesehene Berücksichtigung (bzw. Mitberücksichtigung neben einem Lagesensorsignal, Kurbelwellensignal und/oder Nockenwellensignal) des Ergebnisses der Auswertung des Zylinderdrucksignals im Hinblick auf die Störsignale liefert das Zylinderdrucksignal einen zusätzlichen Nutzen für eine präzise Ansteuerung von Ventiltrieb-Verstelleinrichtungen wie z. B. Nockenwellenverstellsystemen (z. B. "Phasenwandler"). Vorteilhaft kann das auf Basis des Zylinderdrucksignals gewonnene Auswertungsergebnis insbesondere zur Lageeinstellung bzw. -regelung eines Stellgliedes der Ventiltrieb-Verstelleinrichtung genutzt werden. Aus dem Auswertungsergebnis gehen präzise Zeitpunkte der relevanten Vorgänge im Ventiltrieb hervor, welche als eine wertvolle Ist-Information für eine ansonsten z. B. in herkömmlicher Weise aufgebaute Steuerung bzw. Regelung dienen können.

Ein zum Steuern der Brennkraftmaschine verwendetes Steuergerät kann in herkömmlicher Weise als ein elektronisches, insbesondere programmgesteuertes Steuergerät (z. B. Mikrocontroller) vorgesehen sein. Im Rahmen der Erfindung ist das Steuergerät jedoch derart weitergebildet (z. B. durch eine entsprechende Modifikation der Steuersoftware), dass damit ein Steuerverfahren der oben beschriebenen Art durchgeführt wird.

Die oben für das Steuerverfahren bereits beschriebenen Besonderheiten bzw. Ausführungsvarianten können in analoger Weise zur Weiterbildung des erfindungsgemäßen Steuergerätes vorgesehen sein.

Die Erfindung wird nachfolgend anhand eines Ausführungsbeispiels mit Bezug auf die beigefügten Zeichnungen weiter beschrieben. Es stellen dar:
- Fig. 1: eine schematische Schnittdarstellung einer Brennkraftmaschine in Form eines 4-Takt-Ottomotors,
- Fig. 2: eine Darstellung eines Zylinderdrucksignalverlaufes in Abhängigkeit vom Kurbelwinkel bei dem Motor von Fig. 1,
- Fig. 3: eine Auftragung des hochpassgefilterten Zylinderdrucksignals über den Kurbelwinkel, und
- Fig. 4: eine Darstellung verschiedener Hubkurven eines Ventils in Abhängigkeit vom Kurbelwinkel und der aktuellen Einstellung einer VentiltriebVerstelleinrichtung bei dem Motor von Fig. 1.

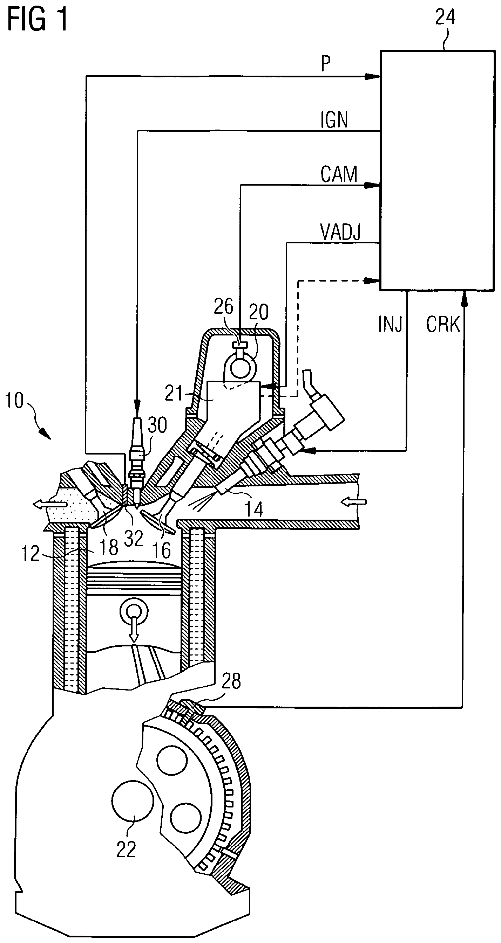

Fig. 1 veranschaulicht eine Brennkraftmaschine 10, bei welcher es sich hier beispielhaft um einen Vierzylinder-4-Takt-Ottomotor handelt.

Jedem Zylinder 12 ist mindestens ein Einspritzventil bzw. Kraftstoffinjektor 14 zum Einspritzen von Kraftstoff (hier: Benzin) in ein einlassseitiges Saugrohr der Brennkraftmaschine 10 zugeordnet.

Des Weiteren ist jedem Zylinder 12 jeweils mindestens ein Einlassventil 16 und mindestens ein Auslassventil 18 sowie mindestens eine Nockenwelle zur Betätigung der Einlass- und Auslassventile zugeordnet. Im dargestellten Ausführungsbeispiel ist eine Nockenwelle 20 zur Betätigung der Einlassventile 16 und eine weitere (nicht dargestellte) Nockenwelle zur Betätigung der Auslassventile 18 vorgesehen.

In an sich bekannter Weise besteht zwischen den Nockenwellen und einer Kurbelwelle 22 eine z. B. über eine Steuerkette oder dergleichen realisierte Drehkopplungsverbindung, welche dafür sorgt, dass die Nockenwellen im Betrieb der Brennkraftmaschine 10 mit der halben Drehzahl der Kurbelwelle 22 umlaufen, um damit ein Arbeitsspiel bzw. einen Gaswechsel gemäß des 4-Takt-Verfahrens zu bewerkstelligen.

Einem elektronischen Steuergerät 24 werden unter anderem ein von der Drehstellung der Nockenwelle 20 abhängiges Nockenwellensignal CAM und ein von der Drehstellung der Kurbelwelle 22 abhängiges Kurbelwellensignal CRK eingegeben. Diese Signale CAM und CRK werden durch eine geeignete Sensorik, hier einen Nockenwellensensor 26 und einen Kurbelwellensensor 28, erzeugt.

In an sich bekannter Weise werden die Signale CAM und CRK jeweils als Rechtecksignale erzeugt.

Jeder Impuls des Kurbelwellensignals CRK entspricht einem Zahn eines Geberrades, wobei eine doppelte Zahnlücke für einen Synchronisationsimpuls nach jeweils einer vollen Umdrehung (360°) der Kurbelwelle 22 sorgt. Typischerweise sind am Umfang des Geberrades z. B. 30 oder 60 Zähne (abzüglich der an der "Lücke" fehlenden Zähne) angeordnet.

Die beiden unterschiedlichen Pegel des Nockenwellensignals CAM entsprechen zwei aufeinanderfolgenden Umdrehungen der Kurbelwelle 22.

Bezüglich dieser Kodierungen der Drehstellungen der Kurbelwelle 22 und der Nockenwelle 20 sei hiermit z. B. auf die Deutsche Patentschrift DE 100 56 862 C1 verwiesen, in welcher sich im Motorbetrieb ergebende zeitliche Verläufe solcher Sensorsignale CRK und CAM zeichnerisch dargestellt und näher beschrieben sind.

Im Betrieb der Brennkraftmaschine 10 steuert das elektronische Steuergerät 24 insbesondere die Kraftstoffeinspritzung (Einspritzzeitpunkte) in die Zylinder 12 mittels des jeweils zugeordneten Kraftstoffinjektors 14 (Ansteuersignal INJ). Darüber hinaus werden mit dem Steuergerät 24 noch andere Vorgänge der Brennkraftmaschine 10 gesteuert, wie hier insbesondere eine Fremdzündung (Zündzeitpunkte) mittels einer jedem Zylinder 12 jeweils zugeordneten Zündkerze 30 (Hochspannungsimpuls IGN).

Eine in Fig. 1 symbolisiert eingezeichnete Ventiltrieb-Verstelleinrichtung 21 dient zur steuerbaren Veränderung der Betätigungscharakteristik des mittels der Nockenwelle 20 betätigten Ventils (hier: Einlassventil 16).

Zwar besteht auch im dargestellten Ausführungsbeispiel zwischen Nockenwelle 20 und Kurbelwelle 22 eine feste Winkelzuordnung durch eine drehfeste Kopplung (bei welcher die Nockenwelle 20 mit der halben Drehzahl der Kurbelwelle 22 umläuft).

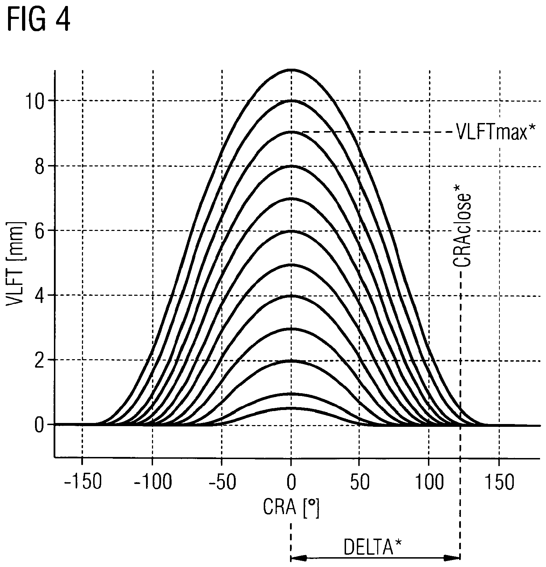

Die Betätigung des Einlassventils 16 erfolgt jedoch nicht unmittelbar bzw. mittelbar über einen invariablen Mechanismus (z. B. einfache Kipphebel etc.), sondern wie in Fig. 1 dargestellt über die mittels eines vom Steuergerät 24 ausgegebenen Einstellsignals VADJ steuerbare Ventiltrieb-Verstelleinrichtung 21. Damit kann die Betätigungscharakteristik, hier also der Zusammenhang zwischen aktueller Drehwinkelstellung der Nockenwelle 20 (Nockenwellenwinkel) und aktuellem Ventilhub VLFT (vgl. Fig. 4) des Ventils 16 gesteuert (insbesondere geregelt) werden. Insbesondere für eine Regelung der Veränderung der Betätigungscharakteristik ist es erforderlich, eine möglichst genaue Information über die aktuelle Einstellung der Ventiltrieb-Verstelleinrichtung 21 zu gewinnen. Hierfür könnte z. B. ein entsprechender "Lagesensor" vorgesehen sein, welcher wie in Fig. 1 mit der gestrichelten Linie symbolisiert ein entsprechendes Sensorsignal an das Steuergerät 24 liefert. Es sei bereits an dieser Stelle angemerkt, dass ein solcher Lagesensor bei der dargestellten Brennkraftmaschine 10 entbehrlich ist, da die aktuelle Einstellung der Ventiltrieb-Verstelleinrichtung 21 wie unten noch beschrieben in anderer Weise ermittelt werden kann.

Der Zweck der Veränderung der Ventilbetätigungscharakteristik ist es, in Abhängigkeit von einem oder mehreren Betriebsparametern des betreffenden Motors (Last, Drehzahl etc.) die Ventilsteuerzeiten zu verändern (z. B. um die so genannte Ventilüberschneidung zu variieren) und/oder den Ventil(maximal)hub in Abhängigkeit von derartigen Betriebsparametern zu variieren. Fig. 4 veranschaulicht eine Veränderung der Betätigungscharakteristik, bei welcher sowohl die Ventilsteuerzeiten als auch der Ventilhub variiert werden.

Mittels des vom Steuergerät 24 gemäß eines Algorithmus zur Steuerung der Einrichtung 21 erzeugten Einstellsignals VADJ kann hierfür z. B. ein elektromechanischer oder elektrohydraulischer Aktor angesteuert werden, der als ein Stellglied zur Veränderung der Betätigungscharakteristik in der Ventiltrieb-Verstelleinrichtung 21 angeordnet ist.

Die Veränderung der Betätigungscharakteristik (hier: für das Einlassventil 16) kann in Stufen oder stufenlos erfolgen.

Die Veränderung der Betätigungscharakteristik kann hierbei eine Ventil(maximal)hubverstellung und/oder eine Veränderung der Ventilsteuerzeiten vorsehen. Letzteres könnte abweichend von dem in Fig. 1 dargestellten Ausführungsbeispiel auch mittels eines so genannten "Phasenwandlers" realisiert werden, mittels welchem z. B. Last- und/oder Drehzahl-abhängig eine Verdrehung der betreffenden Nockenwelle (hier: Nockenwelle 20) gegenüber der Kurbelwelle (und/oder gegenüber einer weiteren Nockenwelle) erfolgt. Derartige Verstellsysteme sind die am weitesten verbreiteten variablen Ventilsteuerungen im Serieneinsatz von Kraftfahrzeugmotoren. Die Nockenprofile selbst und somit der maximale Ventilhub und die Ventilöffnungsdauer bleiben bei derartigen speziellen Verstelleinrichtungen (Phasenwandler) zumeist unverändert.

Insbesondere bei einer stufenlosen Veränderung der Betätigungscharakteristik werden im Stand der Technik als eine Eingangsgröße bei der Steuerung der Veränderung der Betätigungscharakteristik typischerweise die Sensorsignale eines Nockenwellensensors, eines Kurbelwellensensors und eines Lagesensors an der betreffenden Ventiltrieb-Verstelleinrichtung berücksichtigt.

Damit verbunden ist ein entsprechender konstruktiver Aufwand zur Bereitstellung des Lagesensorsignals, insbesondere wenn dieses Signal mit hoher Genauigkeit die aktuelle Einstellung der Ventiltrieb-Verstelleinrichtung darstellen soll. In der Praxis wird dieses Problem z. B. durch sich im Laufe der Zeit allmählich ergebende bzw. vergrößernde Toleranzen verschärft.

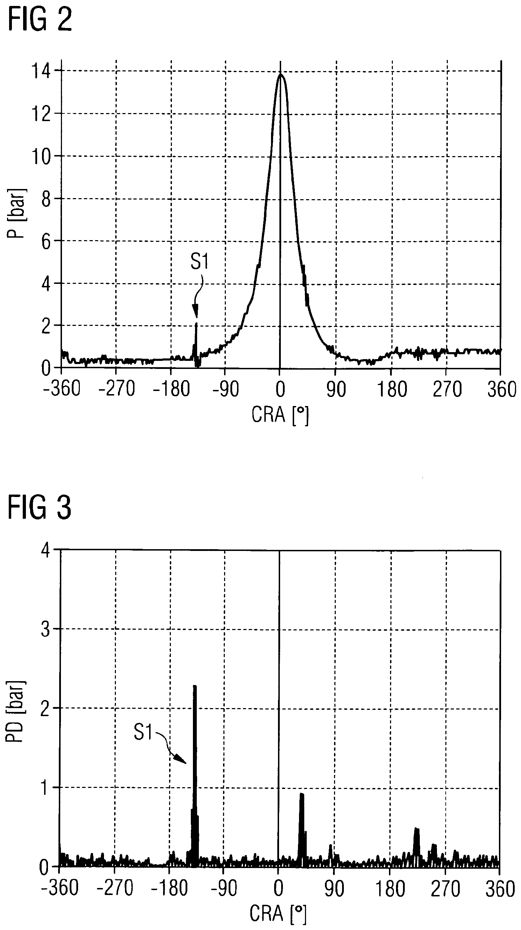

Diese Problematik ist bei der dargestellten Brennkraftmaschine 10 dadurch gelöst, dass jedem der Zylinder 12 ein Zylinderdrucksensor 32 zugeordnet ist, welcher ein den aktuellen Zylinderdruck darstellendes Zylinderdrucksignal P (vgl. Fig. 2) an das Steuergerät 24 liefert. Mittels der im Steuergerät 24 ablaufenden Motorsteuersoftware wird das Zylinderdrucksignal P für die Auswertung der Verbrennung in den Zylindern 12 und darauf aufbauend für die Zumessung des Kraftstoffes, der Luftmasse oder eines zurückzuführenden Verbrennungsabgasanteils herangezogen. Für die Lösung der vorstehend erläuterten Problematik entscheidend ist jedoch, dass mittels des Steuergerätes 24 ferner eine Auswertung des Zylinderdrucksignals P im Hinblick auf darin enthaltene Störsignale durchgeführt wird, und dass das Ergebnis dieser Auswertung als eine Eingangsgröße bei der Steuerung der Ventiltrieb-Verstelleinrichtung 21 berücksichtigt wird. Wie nachfolgend erläutert, erlauben diese Störsignale Rückschlüsse auf die Stellungen der Ventile und somit auch z. B. auf die aktuelle Einstellung der Ventiltrieb-Verstelleinrichtung 21.

Jeder Zylinderdrucksensor 32 kann vorteilhaft nach allen aus dem Stand der Technik bereits bekannten Druckmessprinzipien aufgebaut sein und funktionieren. Wenngleich das davon gelieferte Sensorsignal P in erster Linie von dem im betreffenden Zylinder 12 herrschenden Druck bestimmt wird, so ergibt sich in der Praxis, gewissermaßen als Artefakt der Druckmessung, eine Beeinflussung des Sensorsignals P durch Geräusche bzw. durch Körperschall, welcher zu den Zylinderdrucksensoren übertragen wird.

Verursacht werden solche Geräusche prinzipiell z. B. durch sämtliche mechanischen Vorgänge im Ventiltrieb. Unter den somit erzeugten Störsignalen sind wiederum insbesondere diejenigen dominierend, welche durch den Abschluss eines Ventilschließvorganges hervorgerufen werden. Im dargestellten Ausführungsbeispiel führt z. B. das Aufsetzen des Ventiltellers des Einlassventils 16 auf den Ventildichtbereich des Motorblockes zu einem entsprechenden (charakteristischen) Störsignal im Zylinderdrucksignal P.

Durch die Auswertung des Zylinderdrucksignals P kann somit sehr genau der Zeitpunkt (bzw. Kurbelwinkel) detektiert werden, zu welchem das Einlassventil 16 schließt.

Prinzipiell und abweichend vom dargestellten Ausführungsbeispiel ist es denkbar, dass weniger als ein Zylinderdrucksensor pro vorhandenem Zylinder 12 eingesetzt wird. Insbesondere da jedes Ventil der Brennkraftmaschine 10 in einer anderen räumlichen Beziehung (z. B. Abstand) von einem Zylinderdrucksensor steht, kann anhand vorbestimmter Auswertungskriterien eine Zuordnung eines bestimmten Störsignals zu einem bestimmten Ventil erfolgen. Besser und vom Auswertungsaufwand her einfacher ist es, wenn wie bei dem Ausführungsbeispiel auch vorgesehen je ein Zylinderdrucksensor 32 pro Zylinder 12 (an einer diesen begrenzenden Wandung, z. B. im Zylinderkopf) angeordnet ist.

Eine Vereinfachung der Unterscheidung von Störsignalen, die von den verschiedenen Ventilen ein und desselben Zylinders 12 hervorgerufen werden, lässt sich z. B. dadurch erreichen, dass der betreffende Zylinderdrucksensor 32 nicht "in der Mitte" zwischen den Ventilen angeordnet ist, sondern z. B. mit deutlich verschiedenen "akustischen Abständen" zu den einzelnen Ventilen. In diesem Fall werden sich insbesondere die Amplituden der Störsignale unterscheiden, je nach dem, von welchem der Ventile das betreffende akustische Störgeräusch ausging.

Abweichend von dem in Fig. 1 dargestellten Ausführungsbeispiel könnte die Brennkraftmaschine 10 auch lediglich einen einzigen Zylinder 12 aufweisen. Derartige einzylindrige Brennkraftmaschinen werden z. B. oftmals bei Motorrädern eingesetzt. Auch bei einer einzylindrigen Brennkraftmaschine kann mit Hilfe der Erfindung die Ermittlung eines zur Steuerung der Ventiltrieb-Verstelleinrichtung nützlichen Signals realisiert werden.

Eine Möglichkeit zur Realisierung der Auswertung des Zylinderdrucksignals P wird nachfolgend anhand der Fig. 2 und 3 näher erläutert.

Fig. 2 zeigt einen beispielhaften Verlauf eines an der Brennkraftmaschine 10 mittels des Zylinderdrucksensors 16 gemessenen Zylinderdrucksignals P in Abhängigkeit vom Kurbel(wellen)winkel CRA. In dieser Darstellung entspricht der Wert von CRA = 0° dem oberen Totpunkt der Kolbenbewegung im Zylinder 12. Der Verlauf des Signals P ist hier für den Fall eines geschleppten Betriebes der Brennkraftmaschine 10 dargestellt. Ein ähnlicher Signalverlauf ergibt sich jedoch auch im Schubbetrieb.

In Fig. 2 deutlich erkennbar ist bei einem Kurbelwinkel CRA von etwa -140° dem tatsächlichen Zylinderdruckverlauf ein Störsignal S1 überlagert, welches im dargestellten Beispiel dem Schließen des Einlassventils 16 zugeordnet werden kann.

In einer bevorzugten Ausführungsform der Auswertung des Zylinderdrucksignals P im Hinblick auf solche Störanteile wird das Zylinderdrucksignal P zunächst hochpassgefiltert.

Fig. 3 zeigt das Ergebnis einer Hochpassfilterung des Zylinderdrucksignals P von Fig. 2. Das hochpassgefilterte Signal PD besteht, wie aus Fig. 3 ersichtlich, nahezu lediglich aus den Störsignalen, so dass in einer nachfolgenden Auswertungsstufe die einzelnen Störsignale leichter zu detektieren und den betreffenden Vorgängen im Ventiltrieb zuzuordnen sind.

Insbesondere nach einer derartigen Hochpassfilterung kann in einfacher Weise eine Auswertung im Hinblick auf diejenigen Störsignale erfolgen, die durch die Einlassventile und/oder Auslassventile bei deren Betätigung hervorgerufen wurden.

Wie es Fig. 3 verdeutlicht, kann somit bereits mit Hilfe eines einfachen Hochpassfilters und der Ermittlung von Störimpulsen (z. B. anhand der Überschreitung einer vorbestimmten Schwelle) ein "Ventil schließt"-Signal aus dem eigentlichen Zylinderdrucksignal P ermittelt werden. Alternativ oder zusätzlich zu einer Überprüfung des gefilterten Signals hinsichtlich der Überschreitung einer oder mehrerer vorbestimmter Schwellen könnte z. B. ein Mustervergleich zwischen dem tatsächlich detektierten Signalmuster und vorab gespeicherten und jeweiligen Ventiltriebvorgängen zugeordneten Signalmustern erfolgen. Ein solcher Mustervergleich erfolgt bevorzugt jedoch nur für einen zuvor bereits als solchen identifizierten "Störsignalverlauf". Wie bereits erwähnt, kann der Beginn eines solchen Störsignalverlaufes z. B. durch Detektion einer plötzlichen bzw. abnormalen Änderung des Zylinderdrucksignals P festgestellt werden. Der sich im Anschluss daran ergebende Signalverlauf kann zwecks Identifizierung des auslösenden Ereignisses mit vorab gespeicherten Signalmustern verglichen werden, um die Störung einem bestimmten Ventiltriebvorgang zuzuordnen. Eine derartige Vorgehensweise, bei welcher ein Mustervergleich allenfalls für das Störsignal selbst und nicht für einen länger andauernden Signalverlauf durchgeführt wird, liefert besonders rasch ein nutzbares Auswertungsergebnis.

Dieses Auswertungsergebnis liefert im dargestellten Ausführungsbeispiel also denjenigen Zeitpunkt bzw. Kurbelwinkel CRA, bei welchem das Einlassventil 16 schließt.

Nachfolgend wird mit Bezug auf Fig. 4 erläutert, wie durch die im Steuergerät 24 ablaufende Software aus dieser "Ventil schließt"-Information auf die aktuelle Einstellung der Ventiltrieb-Verstelleinrichtung 21 geschlossen wird.

Fig. 4 zeigt beispielhaft 12 verschiedene "Hubkurven", d. h. Verläufe des aktuellen Ventilhubs VLFT in Abhängigkeit vom Kurbelwinkel CRA.
Wie dargestellt bilden die verschiedenen Hubkurven in dieser Auftragung eine Schar von sich nicht schneidenden Verläufen.

Im Falle einer stufenlosen Veränderung der in Fig. 4 veranschaulichten Betätigungscharakteristik sind theoretisch unendlich viele verschiedene Hubkurven erzielbar. Die in Fig. 4 beispielhaft dargestellten 12 Verläufe sollen lediglich eine Besonderheit der hier verwendeten Verstellbarkeit verdeutlichen, die darin besteht, dass jede Verstellung der Ventiltrieb-Verstelleinrichtung 21 insbesondere zu einer Veränderung des Zeitpunktes bzw. Kurbelwinkels CRA führt, zu welchem das betreffende Ventil (Einlassventil 16) schließt. Mit anderen Worten kann auf Basis der Information über den Schließzeitpunkt auf den gesamten Hubkurvenverlauf bzw. die aktuelle Einstellung der Ventiltrieb-Verstelleinrichtung 21 geschlossen werden.

Es sei beispielsweise angenommen, dass diese aktuelle Einstellung eine Hubkurve liefert, deren Maximum in Fig. 4 mit VLFTmax* und deren kurbelwinkelmäßiges Ende in Fig. 4 mit CRAclose* bezeichnet ist. Anhand des Nockenwellensignals CAM (in Verbindung mit dem Kurbelwellensignal CRK) kann das Steuergerät 24 die winkelmäßige Position des Hubmaximums (in Fig. 4 bei 0° eingezeichnet) ermitteln. In Kombination mit dem Zeitpunkt bzw. Kurbelwinkel CRAclose* kann der in Fig. 4 mit DELTA* bezeichnete winkelmäßige Abstand zwischen Hubmaximum und Ventilschließzeitpunkt berechnet werden. Dieser Abstand stellt im dargestellten Ausführungsbeispiel die halbe Ventilöffnungsdauer dar und kann eindeutig dem Hubmaximum VLFTmax* bzw. der zugehörigen Hubkurve zugeordnet werden. In der Motorsteuerung kann diese Zuordnung durch einen geeigneten Softwarealgorithmus bzw. durch Verwendung eines vorab gespeicherten Kennfeldes vorgenommen werden.

Bei diesem Beispiel ist das Ergebnis der Auswertung des Zylinderdrucksignals P zunächst der Zeitpunkt bzw. Kurbelwinkel (CRAclose*), bei welchem das Einlassventil 16 schließt. Der in dieser speziellen Weise ermittelte Zeitpunkt (und/oder eine daraus abgeleitete Zeitspanne wie DELTA*) wird als eine Eingangsgröße demjenigen Teil der im Steuergerät 24 ablaufenden Motorsteuersoftware zugeführt, welcher als Ausgangsgröße das Einstellsignal VADJ für die Ventiltrieb-Verstelleinrichtung 21 erzeugt. Diese Erzeugung beruht auf einer Berechnung, bei welcher die Ausgangsgröße von der Eingangsgröße abhängig ist.

Somit kann mithilfe der erfindungsgemäßen Auswertung des Zylinderdrucksignals im Hinblick auf die für Ventilbetätigungsvorgänge charakteristischen Störsignale insbesondere eine Ventilhubregelung aufgebaut werden, bei welcher ein eigens zur Detektion der aktuellen Einstellung der Ventiltrieb-Verstelleinrichtung 21 vorgesehener Lagesensor entfallen bzw. (z. B. alterungsbedingte) Abweichungen des Lagesensorsignals vorteilhaft adaptiert werden können.

Zusammenfassend wird bei der Brennkraftmaschine 10 die Anfälligkeit des Zylinderdrucksensors 32 auf Störgeräusche ausgenutzt, um daraus zunächst eine Information über die aktuelle Stellung wenigstens eines Ventils abzuleiten und (durch eine gegebenenfalls weitere Auswertung im Bereich des Steuergerätes 24) eine nutzbringende Information (z. B. CRAclose* und/oder DELTA*) für die Steuerung der Ventiltrieb-Verstelleinrichtung 21 zu liefern.

Falls beispielsweise die Brennkraftmaschine 10 mit einer variablen Ventilsteuerung (Ventiltrieb-Verstelleinrichtung) in Form eines so genannten "Phasenwandlers" ausgestattet ist, so bedeutet dies eine nicht mehr eindeutige bzw. vom Zustand der betreffenden Verstelleinrichtung abhängige Zuordnung zwischen Nockenwellenwinkel und Ventilbetätigung. Mit der Verwendung von Zeitpunkten wie "Ventil schließt", die aus dem Zylinderdrucksignal P ermittelt werden, liegt dem Steuergerät 24 jedoch stets eine echte physikalische Rückmeldung über die Position des Ventils vor. Diese Information kann daher vorteilhaft bei der Ansteuerung (insbesondere Regelung) des entsprechenden Verstellsystems genutzt werden.

Weiterhin kann diese Information z. B. verwendet werden, um Fehler bzw. Abweichungen bei Nockenwellenlagesensoren (der variablen Ventilsteuerung) zu detektieren bzw. zu adaptieren.

Es ist sogar ein Betrieb des Motors ohne Nockenwellensensor möglich (indem stattdessen das Ergebnis der Auswertung des Zylinderdrucksignals P herangezogen wird). Ferner ist z. B. ein Notlauf des Motors bei einem Defekt des Kurbelwellensensors und/oder des Nockenwellensensors möglich.

Wenn beim Zusammenbau des Motors 10 die drehwinkelmäßige Zuordnung zwischen Nockenwelle 20 und Kurbelwelle 22 in Grundposition nicht korrekt durchgeführt wird, z. B. bei einem Auswechseln eines Nockenwellenzahnriemens in einer Kfz-Werkstatt, so hat die Motorsteuerung 24 eine falsche Information über die Position der Nockenwelle 22. Dies hätte normalerweise zur Folge, dass die Parameter für die Verbrennung nicht richtig vom Motorsteuergerät 24 eingestellt werden können, was zu erhöhten Emissionen, schlechtem Motorlauf, und im Extremfall sogar zu Motorschäden führen kann. Eine ähnliche Problematik ergibt sich bei Abweichungen durch Fertigungstoleranzen, Alterung usw. Derartige Zusammenbaufehler und auch erst später im Betrieb auftretende Abweichungen von der Sollposition bzw. -konfiguration können mit Hilfe der Auswertung des Zylinderdrucksignals P jedoch vorteilhaft erfasst und berücksichtigt werden.

## Patentansprüche

1. Verfahren zum Steuern einer ein- oder mehrzylindrigen Brennkraftmaschine (10) mit
- mindestens einem Kraftstoffinjektor (14) je Zylinder (12) zum Einspritzen von Kraftstoff,
- mindestens einer Nockenwelle (20) zur Betätigung wenigstens eines Einlassventils (16) und/oder wenigstens eines Auslassventils (18), wobei eine Ventiltrieb-Verstelleinrichtung (21) zur steuerbaren Veränderung der Betätigungscharakteristik von wenigstens einem mittels der Nockenwelle (20) betätigten Ventil (16) vorgesehen ist,
- einem Kurbelwellensensor (28), der ein den Kurbelwellenwinkel (CRA) darstellendes Kurbelwellensignal (CRK) liefert, und
- einem Steuergerät (24) zur Steuerung der Kraftstoffeinspritzung und der Ventiltrieb-Verstelleinrichtung (21),
**dadurch gekennzeichnet, dass** mindestens ein von einem Zylinderdrucksensor (32) zur Messung des Drucks in einem zugeordneten Zylinder (12) geliefertes Zylinderdrucksignal (P) ausgewertet wird, indem ausgehend von Veränderungen des Störgeräuschs, das durch Aufsetzen des Ventilkörpers entsteht, auf einen zuvor erreichten Ventilmaximalhub geschlossen wird, und dass das Auswertungsergebnis als eine Eingangsgröße bei der Steuerung der Ventiltrieb-Verstelleinrichtung (21) berücksichtigt wird, indem, während der Ventilschließzeitpunkt unverändert bleibt, auf die Einstellung des Ventilmaximalhubs der Ventiltrieb-Verstelleinrichtung (21) geschlossen wird.

2. Verfahren nach Anspruch 1, wobei die Veränderung der Betätigungscharakteristik des betreffenden Ventils (16) eine Ventilhubverstellung umfasst und das Auswertungsergebnis als eine Eingangsgröße bei der Steuerung der Ventilhubverstellung berücksichtigt wird.

3. Verfahren nach einem der vorangehenden Ansprüche, wobei die Veränderung der Betätigungscharakteristik des betreffenden Ventils (16) eine Nockenwellenphasenverstellung umfasst und das Auswertungsergebnis als eine Eingangsgröße bei der Steuerung der Nockenwellenphasenverstellung berücksichtigt wird.

4. Verfahren nach einem der vorangehenden Ansprüche, wobei die Veränderung der Betätigungscharakteristik des betreffenden Ventils (16) stufenlos erfolgt.

5. Verfahren nach einem der vorangehenden Ansprüche, wobei für die Steuerung der Ventiltrieb-Verstelleinrichtung (21) eine aktuelle Einstellung der Ventiltrieb-Verstelleinrichtung (21) ermittelt wird, indem ein auf Basis des Auswertungsergebnisses detektierter bestimmter Zeitpunkt oder Kurbelwinkel (CRA) eines bestimmten Ereignisses eines Ventilbetätigungsvorganges in Relation zu einem auf Basis eines, von einem Nockenwellensensor gelieferten Nockenwellensignals (CAM) detektierten Zeitpunkt bzw. Kurbelwinkel (CRA) eines anderen bestimmten Ereignisses desselben Ventilbetätigungsvorganges gesetzt wird.

6. Verfahren nach einem der vorangehenden Ansprüche, wobei das Auswertungsergebnis ferner zur Plausibilisierung des vom Kurbelwellensensor (28) gelieferten Kurbelwellensignals (CRK) und/oder des vom Nockenwellensensor (26) gelieferten Nockenwellensignals (CAM) verwendet wird.

7. Verfahren nach einem der vorangehenden Ansprüche, wobei die Brennkraftmaschine (10) mehrere Zylinder (12) aufweist und die Zylinderdrucksignale (P) von sämtlichen Zylindern (12) jeweils zugeordneten Zylinderdrucksensoren (32) ausgewertet werden.

## Claims

1. Method for controlling a single-cylinder or multi-cylinder internal combustion engine (10) having
- at least one fuel injector (14) per cylinder (12) for injecting fuel,
- at least one camshaft (20) for actuating at least one inlet valve (16) and/or at least one outlet valve (18), wherein a valve drive adjustment device (21) is provided for controllable change of the actuation characteristic of at least one valve (16) that is actuated by means of the camshaft (20),
- a crankshaft sensor (28) which outputs a crankshaft signal (CRK) which represents the crankshaft angle (CRA), and
- a control unit (24) for controlling the fuel injection and the valve drive adjustment device (21),
**characterized in that** at least one cylinder pressure signal (P) output by a cylinder pressure sensor (32) for measuring the pressure in an associated cylinder (12) is evaluated by virtue of a previously reached maximum valve stroke being inferred proceeding from changes in the interference noise resulting from the setting-down of the valve body, and **in that** the evaluation result is taken into consideration as an input variable in the control of the valve drive adjustment device (21) by virtue of the setting of the maximum valve stroke of the valve drive adjustment (21) being inferred while the valve closing time remains unchanged.

2. Method according to Claim 1, wherein the change of the actuation characteristic of the respective valve (16) encompasses a valve lift adjustment and the evaluation result is taken into consideration as an input variable in the control of the valve lift adjustment.

3. Method according to either of the preceding claims, wherein the change of the actuation characteristic of the respective valve (16) encompasses a camshaft phase adjustment and the evaluation result is taken into consideration as an input variable in the control of the camshaft phase adjustment.

4. Method according to one of the preceding claims, wherein the change of the actuation characteristic of the respective valve (16) takes place in continuous fashion.

5. Method according to one of the preceding claims, wherein, for the control of the valve drive adjustment device (21), a present setting of the valve drive adjustment device (21) is determined by virtue of a certain time or crank angle (CRA), detected on the basis of the evaluation result, of a certain event of a valve actuation process being set in relation to a time or crank angle (CRA), detected on the basis of a camshaft signal (CAM) output by a camshaft sensor, of another certain event of the same valve actuation process.

6. Method according to one of the preceding claims, wherein the evaluation result is furthermore used for checking the plausibility of the crankshaft signal (CRK) output by the crankshaft sensor (28) and/or of the camshaft signal (CAM) output by the camshaft sensor (26).

7. Method according to one of the preceding claims, wherein the internal combustion engine (10) has a plurality of cylinders (12) and the cylinder pressure signals (P) of cylinder pressure sensors (32) respectively assigned to all of the cylinders (12) are taken into consideration.

## Revendications

1. Procédé de commande d'un moteur à combustion interne (10) à un ou plusieurs cylindres, comprenant
- au moins un injecteur de carburant (14) pour chaque cylindre (12) pour l'injection de carburant,
- au moins un arbre à cames (20) pour l'actionnement d'au moins une soupape d'entrée (16) et/ou d'au moins une soupape de sortie (18), un dispositif de réglage de commande des soupapes (21) pour faire varier de manière commandable la caractéristique d'actionnement d'au moins une soupape (16) actionnée au moyen de l'arbre à cames (20) étant prévu,
- un détecteur de vilebrequin (28) qui fournit un signal de vilebrequin (CRK) représentant l'angle de vilebrequin (CRA), et
- un appareil de commande (24) pour commander l'injection de carburant et le dispositif de réglage de commande des soupapes (21),
**caractérisé en ce qu'**au moins un signal de pression de cylindre (P) fourni par un détecteur de pression de cylindre (32) pour mesurer la pression dans un cylindre associé (12) est analysé, **en ce qu'**à partir de variations du bruit de fond qui se produit du fait du contact de pose du corps de soupape, on en conclut à une course maximale de soupape atteinte préalablement et **en ce que** le résultat de l'analyse est pris en compte en tant que grandeur d'entrée lors de la commande du dispositif de réglage de commande des soupapes (21) par le fait que, l'instant de fermeture de soupape restant inchangé, on en conclut à l'ajustement de la course maximale de soupape du dispositif de réglage de commande des soupapes (21).

2. Procédé selon la revendication 1, dans lequel la variation de la caractéristique d'actionnement de la soupape concernée (16) comprend un réglage de la course de soupape et le résultat de l'analyse est pris en compte en tant que grandeur d'entrée lors de la commande du réglage de course de la soupape.

3. Procédé selon l'une quelconque des revendications précédentes, dans lequel la variation de la caractéristique d'actionnement de la soupape concernée (16) comprend un réglage de l'angle de phase de l'arbre à cames et le résultat de l'analyse est pris en compte en tant que grandeur d'entrée lors de la commande du réglage de l'angle de phase de l'arbre à cames.

4. Procédé selon l'une quelconque des revendications précédentes, dans lequel la variation de la caractéristique d'actionnement de la soupape concernée (16) s'effectue en continu.

5. Procédé selon l'une quelconque des revendications précédentes, dans lequel, pour la commande du dispositif de réglage de commande des soupapes (21), on détermine un ajustement actuel du dispositif de réglage de commande des soupapes (21) par le fait qu'un instant déterminé ou un angle de vilebrequin déterminé (CRA), détecté sur la base des résultats d'analyse, d'un résultat déterminé d'une opération de commande des soupapes, est mis en relation avec un instant ou un angle de vilebrequin (CRA) d'un autre résultat déterminé de la même opération de commande des soupapes, détecté sur la base d'un signal d'arbre à cames (CAM) fourni par un détecteur d'arbre à cames.

6. Procédé selon l'une quelconque des revendications précédentes, dans lequel le résultat d'analyse est en outre utilisé pour établir la plausibilité du signal d'arbre à cames (CRK) fourni par le détecteur d'arbre à cames (28) et/ou du signal d'arbre à cames (CAM) fourni par le détecteur d'arbre à cames (26).

7. Procédé selon l'une quelconque des revendications précédentes, dans lequel le moteur à combustion interne (10) présente plusieurs cylindres (12) et les signaux de pression des cylindres (P) sont analysés par des détecteurs de pression de cylindre (32) respectivement associés à tous les cylindres (12).
